# EUROPEAN PATENT SPECIFICATION

(11) **EP 1 782 493 B1**
(45) Date of publication and mention of the grant of the patent: **17.12.2014**
(21) Application number: 05780529.3
(22) Date of filing: 16.08.2005
(51) Int. Cl.: H01M 4/62, H01M 4/131, H01M 10/42, H01M 4/133, H01M 4/525, H01M 10/0525

(54) **LITHIUM SECONDARY BATTERIES WITH ENHANCED SAFETY AND PERFORMANCE**
LITHIUM-SEKUNDÄRBATTERIEN MIT VERBESSERTER SICHERHEIT UND LEISTUNGSFÄHIGKEIT
ACCUMULATEURS AU LITHIUM PRESENTANT DES PERFORMANCES ET UNE SECURITE ACCRUES

(30) Priority: 17.08.2004 KR 2004064673
(43) Date of publication of application: 09.05.2007
(73) Proprietor: LG CHEM, LTD., Seoul 150-721 (KR)
(72) Inventor: YONG, Hyun-Hang, Seoul 152-102 (KR); LEE, Sang-Young, Daejeon 305-761 (KR); KIM, Seok-Koo, Daejeon 305-761 (KR); AHN, Soon-Ho, Yuseong-gu, Daejeon 305-707 (KR); SUK, Jung-Don, Daejeon 305-333 (KR)
(74) Representative: Cabinet Plasseraud
(86) International application number: PCT/KR2005/002666
(87) International publication number: WO 2006/019245

(56) References cited:
- US-A- 5 085 953
- US-A- 5 928 812
- US-A- 5 962 167
- US-A1- 2002 015 890
- US-A1- 2004 086 445
- NUSPL GERHARD ET AL: "Lithium ion migration pathways in LiTi2(PO4)3 and related materials" JOURNAL OF APPLIED PHYSICS, AMERICAN INSTITUTE OF PHYSICS. NEW YORK, US, vol. 86, no. 10, 15 November 1999 (1999-11-15), pages 5484-5491, XP012047960 ISSN: 0021-8979

## Description

### Technical Field

The present invention relates to an electrochemical device, preferably a lithium secondary battery, which uses inorganic particles having lithium ion conductivity as additive for an electrode, and thus shows improved safety under overcharge or high-temperature storage conditions with no degradation in the battery quality.

### Background Art

Recently, many attempts are made to continuously downsize and lighten portable electronic instruments including portable computers, portable phones, camcorders, etc. At the same time, it is required for lithium secondary batteries used in such electronic instruments as power sources to have a higher capacity, more compact size, lighter weight and a smaller thickness.

A lithium secondary battery comprises a cathode, anode, separator and an electrolyte. Such lithium secondary batteries are capable of repeating charge/discharge cycles, because lithium ions reciprocate between a cathode and anode in such a manner that lithium ions deintercalated from a cathode active material upon the first charge cycle are intercalated into an anode active material such as carbon particles and then deintercalated again from the anode active material, while serving to transfer energy.

When a lithium secondary battery is overcharged to a voltage exceeding a predetermined drive voltage range or when an exothermic reaction proceeds between a cathode and electrolyte in a charged state at high temperature, reactivity between the cathode and electrolyte increase, resulting in degradation of the cathode surface and oxidation of the electrolyte. Additionally, there are problems related with lack of battery safety, for example, lithium dendrite growth followed by breakage of a separator, rapid exothermic reaction and explosion of the battery.

To solve the above problems, Korean Laid-Open Patent No. 2000-0031096 discloses the use of molecular sieves or finely divided fumed silica added to an electrode or electrolyte of a lithium ion battery for stabilization of the battery. However, as the amount of additives increases, the amount of cathode active material decreases. Further, when viewed from the point of electrolyte, it seems that the electrolyte is adversely affected by addition of non-reactive materials. Therefore, the above additives cause a problem of degradation in the battery quality.

In addition, Korean. Patent Publication Nos. 0326455, 0326457 and 0374010 disclose methods for coating inorganic oxide particles on a cathode active material in order to improve the safety of a battery. However, such methods have a disadvantage in that they cause degradation in the battery quality in proportion to the amount of added inorganic oxide particles, even if the battery safety may be improved.

US 5,962,167 discloses a lithium secondary battery comprising a cathode, anode, separator interposed between both electrodes and an electrolyte, wherein the cathode electrode comprises LiCoO₂ as electrode active material and Li₃PO₄ as inorganic particles in an amount between 0.05 and 20 parts by weight per 100 parts by weight of the electrode active material to prevent bursting of the cell under overcharge conditions. Furthermore NUSPL GERHARD ET AL: "Lithium ion migration pathways in LiTi2(PO4)3 and related materials", JOURNAL OF APPLIED PHYSICS, vol. 86, no. 10, pages 5484-5491, discloses LiTi₂(PO₄)₃ as lithium-ion conductive solid electrolyte and investigates its conduction mechanism.

### Disclosure of the Intention

The present invention has been made in view of the above-mentioned problems. We have found that when inorganic particles having lithium ion conductivity are added to an electrode active material forming an electrode of a lithium secondary battery, the battery safety can be improved while minimizing degradation in the battery quality caused by the use of additives.

Therefore, it is an object of the present invention to provide an electrode capable of improving the safety of a battery and preventing degradation in the battery quality caused by the use of additives.

According to an aspect of the present invention, there is provided an electrode obtained from electrode slurry comprising: (a) an electrode active material capable of lithium intercalation/deintercalation; and (b) at least one inorganic particle as defined in claim 1. According to another aspect of the present invention, there is provided an electrochemical device, preferably a lithium secondary battery, including the same electrode.

Hereinafter, the present invention will be explained in more detail.

The present invention is characterized in that an electrode for an electrochemical device (for example, a lithium secondary battery) includes not only a conventional electrode active material known to one skilled in the art but also inorganic particles as defined in claim 1 having lithium ion conductivity, which serve as supplement for the electrode active material.

According to the above characteristic of the present invention, it is possible to obtain the following effects:
(1) Because conventional inorganic particles added to an electrode in order to improve the safety of an electrochemical device are inert, lithium ion conductivity in the device are decreased, resulting in degradation in the quality of the electrochemical device. On the contrary, the electrode according to the present invention uses inorganic particles having lithium ion conductivity as additive for an electrode. Therefore, it is possible to minimize a drop in lithium ion conductivity in an electrochemical device caused by the use of additives, and thus to prevent degradation in the quality of an electrochemical device.
(2) Additionally, the electrode obtained by adding such inorganic particles significantly reduces the amount of electrolyte to be in contact with the surface of a charged electrode, and thus inhibits an exothermic reaction between the electrode active material and electrolyte, such exothermic reaction resulting in the lack of thermal safety of an electrochemical device. Therefore, it is possible to improve the safety of an electrochemical device. Particularly, the inorganic particles inherently experience no change in physical properties even under a high temperature of 200°C or higher. In other words, the inorganic particles have excellent heat resistance. Accordingly, the electrode according to the present invention causes no degradation in the safety under severe conditions including high temperature, overcharge, etc.

According to the present invention, any inorganic particles may be used as additive for an electrode when forming electrode slurry, as long as they have lithium ion conductivity as described above. As used herein, "inorganic particles having lithium ion conductivity" are referred to as inorganic particles containing lithium elements and having a capability of transferring lithium ions without storing lithium.

In general, currently used electrode active materials are in a crystal system, and thus have a structure capable of storing lithium in a lattice, for example a unique lattice structure such as a layered structure or spinel structure. On the contrary, the inorganic particles having lithium ion conductivity according to the present invention may be in a non-crystal system as well as a crystal system. More particularly, even though the inorganic particles used according to the present invention have the same crystal system as a general electrode active material, the inorganic particles cannot store lithium ions in the lattice structure but can move and transfer lithium ions through the defects or vacancies present inside the lattice structure. Accordingly, although the inorganic particles having lithium ion conductivity used according to the present invention have a similar apparent structure to the structure of a conventional cathode active material known to one skilled in the art, they are not suitable to be used as electrode active materials that store lithium ions and intercalates/ deintercalates lithium ions into/from the lattice structure. However, because the inorganic particles according to the present invention can transfer and move lithium ions through the defects present inside the lattice structure of the inorganic particles, it is possible to improve the overall lithium ion conductivity in a battery, compared to other electrode additives serving as inert fillers, by virtue of the lithium ion conductivity of the inorganic particles, and thus to prevent degradation in the battery quality.

Inorganic particles, having lithium ion conductivity according to claim 1 are lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓC_{y} type glass (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), such as Li_{3.25}Ge_{0.25}P_{0.75}S₄, SiS₂ type glass (LiₓSi_{y}S_{z}, 0<x<3, 0<y<2, 0<z<4) such as Li₃PO₄-Li₂S-SiS₂, P₂S₅ type glass (LiₓP_{y}S_{z}, 0<x<3, 0<y<3, 0<z<7) such as LiI-Li₂S-P₂S₅, or mixtures thereof.

The inorganic particles contained in the electrode is used in an amount of 0.01-10 parts by weight of the inorganic particles per 100 parts by weight of an electrode active material. When the inorganic particles are used in an amount of less than 0.01 parts by weight, it is not possible to improve the safety of a battery sufficiently. On the other hand, when the inorganic particles are used in an amount of greater than 10 parts by weight, there is a problem of degradation in the battery capacity and quality.

The electrode according to the present invention can be manufactured by a conventional method known to one skilled in the art. In one embodiment of the method, both electrode active materials, i.e., a cathode active material and/or anode active material is mixed with the above-described additive to form electrode slurry. Then, the electrode slurry is applied onto each current collector and the solvent or dispersant is removed therefrom by drying, etc., so that the active material particles are boned to the collector and to each other. If necessary, a conductive agent and/or binder may be added to the electrode slurry in a small amount.

Particularly, cathode active materials may include any conventional cathode active materials currently used in a cathode of a conventional electrochemical device. Particular non-limiting examples of the cathode active material include lithium intercalation materials, such as lithium manganese oxides, lithium cobalt oxides, lithium nickel oxides, lithium iron oxides or composite oxides thereof.

Additionally, anode active materials may include any conventional anode active materials currently used in an anode of a conventional electrochemical device. Particular non-limiting examples of the anode active material include materials capable of lithium intercalation/deintercalation, such as lithium metal, lithium alloys, carbon, petroleum coke, activated carbon, graphite or other carbonaceous materials. Further, other metal oxides, which are capable of lithium intercalation/deintercalation and have a voltage versus lithium of lower than 2V, such as TiO₂, SnO₂ or Li₄Ti₅O₁₂ may be used.

The conductive agent may be any electroconductive material that does not undergo a chemical change in a finished battery. Particular examples of the conductive agent that may be used include carbon black such as acetylene black, ketjen black, furnace black, thermal black, etc.; natural graphite, artificial graphite, conductive carbon fiber, or the like. It is preferable to use carbon black, graphite powder and carbon fiber.

The binder that may be used includes any one of thermoplastic resins and thermosetting resigns, or any combination thereof. Among those, preferred is polyvinylidene difluoride (PVdF) or polytetrafluoro ethylene (PTFE). More particularly, PVdF is preferred.

There is no particular limitation in the current collector as long as it is formed of a conductive material. However, particularly preferred examples of a cathode current collector include foil formed of aluminum, nickel or a combination thereof. Non-limiting examples of an anode current collector include foil formed of copper, gold, nickel, copper alloys or a combination thereof.

As described above, the present invention also provides an electrochemical device comprising a cathode, anode, separator interposed between both electrodes and an electrolyte, wherein either or both of the cathode and anode are obtained from electrode slurry comprising the above-described additive having lithium ion conductivity.

Such electrochemical devices include any devices in which electrochemical reactions occur and particular examples thereof include all kinds of primary batteries, secondary batteries, fuel cells, solar cells or capacitors. Particularly, it is preferable that the electrochemical devices are secondary batteries such as secondary lithium metal batteries, secondary lithium ion batteries, secondary lithium polymer batteries or secondary lithium ion polymer batteries.

The electrochemical device may be manufactured by a conventional method known to one skilled in the art. For example, a porous separator is interposed between a cathode and anode to provide an electrode assembly and then an electrolyte is injected thereto.

The electrolyte that may be used in the present invention includes a salt represented by the formula of A⁺B⁻ , wherein A⁺ represents an alkali metal cation selected from the group consisting of Li⁺, Na⁺, K⁺ and combinations thereof, and B⁻ represents an anion selected from the group consisting of PF₆⁻, BF₄⁻, Cl⁻, Br⁻, I⁻, ClO₄⁻, ASF₆⁻, CH₃CO₂⁻, CF₃SO₃⁻, N(CF₃SC₂)₂⁻, C(CF₂SO₂)₃⁻ and combinations thereof, the salt being dissolved or dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (γ-butyrolactone; GBL) and mixtures thereof. However, the electrolyte that may be used in the present invention is not limited to the above examples.

The separator that may be used includes a conventional porous separator known to one skilled in the art. Non-limiting examples of such porous separators include polypropylene-based, polyethylene-based and polyolefin-based porous separators.

Although there is no particular limitation in shape of the electrochemical device according to the present invention, the electrochemical device may have a cylindrical, prismatic, pouch-like or a coin-like shape.

### Best Mode for Carrying Out the Intention

Reference will now be made in detail to the preferred embodiments of the present invention. It is to be understood that the following examples are illustrative only and the present invention is not limited thereto.

### Example 1. Manufacture of Lithium Secondary Battery

### 1-1. Manufacture of cathode

To N-methyl-2-pyrrolidone (NMP) as solvent, 89 wt% of lithium cobalt composite oxide (LiCoO₂) as cathode active material, 3 wt% of lithium titanium phosphate (LiTi₂(PO₄)₃) powder as inorganic particles having lithium ion conductivity, 4 wt% of carbon black as conductive agent and 4 wt% of PVDF (polyvinylidene difluoride) as binder were added to form slurry for a cathode. The slurry was coated on A1 foil having a thickness of 20 µm as cathode collector and dried to form a cathode. Then, the cathode was subjected to roll press.

### 1-2. Manufacture of anode

To N-methyl-2-pyrrolidone (NMP) as solvent, 96 wt% of carbon powder as anode active material, 3 wt% of PVDF (polyvinylidene difluoride) as binder and 1 wt% of carbon black as conductive agent were added to form mixed slurry for an anode. The slurry was coated on Cu foil having a thickness of 10 µm as anode collector and dried to form an anode. Then, the anode was subjected to roll press.

### 1-3. Manufacture of Battery

A separator formed of polypropylene/polyethylene/ polypropylene (PP/PE/PP) was interposed between the cathode and anode obtained from the above Example 1-1 and Example 1-2, respectively. Then, an electrolyte (ethylene carbonate (EC)/propylene carbonate (PC)/ diethyl carbonate (DEC)= 30/20/50 (wt%) containing 1 M of lithium hexafluorophosphate (LiPF₆)) was injected thereto to provide a battery.

### Comparative Example 1. Manufacture of Lithium Secondary Battery

Example 1 was repeated to provide a lithium secondary battery, except that a cathode obtained by using 92 wt% of LiCoO₂ as cathode active material with no use of lithium titanium phosphate (LiTi₂(PO₄)₃) powder.

### Experimental Example 1. Overcharge Test for Lithium Secondary Batteries

The following test was performed to evaluate the safety of the lithium secondary battery equipped with the electrode obtained from electrode slurry comprising inorganic particles having lithium ion conductivity according to the present invention.

Each of the lithium secondary batteries according to Example 1 and Comparative Example 1 was used as sample. Each battery was charged under the conditions of 10V/1A and then checked. The results are shown in the following Table 1.

After checking, the battery according to Comparative Example 1 showed a rapid increase in the battery temperature due to the overcharge of battery, resulting in ignition and explosion of the battery. On the contrary, the battery equipped with the electrode obtained from electrode slurry comprising inorganic particles having lithium ion conductivity according to the present invention showed excellent safety upon overcharge (see, Table 1). This indicates that the inorganic particles having lithium ion conductivity, used as additive for an electrode, significantly reduce the amount of electrolyte to be in contact with the electrode surface in a charged state, and thus inhibits side reactions between the electrode active material and electrolyte, resulting in improvement in the battery safety.

As can be seen from the above results, the lithium secondary battery equipped with the electrode according to the present invention, shows improved safety under overcharge conditions, the electrode being obtained from electrode slurry comprising inorganic particles having lithium ion conductivity.

**[Table 1]**

| Battery | Ignition | Explosion | Fuming |
|---|---|---|---|
| Ex. 1 | X | X | X |
| Comp. Ex. 1 | ○ | ○ | ○ |

### Industrial Applicability

As can be seen from the foregoing, the electrochemical device using inorganic particles having lithium ion conductivity as additive for an electrode according to the present invention shows improved safety, while minimizing degradation in the battery quality caused by the use of additives.

## Claims

1. An electrode comprising:
(a) an electrode active material capable of lithium intercalation/deintercalation; and
(b) at least one inorganic particles selected from the group consisting of: lithium titanium phosphate (LiₓTi_{y}PO₄)₃, 0<x<2, 0<y<3), lithium aluminum titanium phosphate (LiₓAl_{y}Ti_{z}(PO₄)₃, 0<x<2. 0<y<1, 0<z<3), (LiAlTiP)ₓO_{y} type glass (0<x<4, 0<y<13), lithium lanthanum titanate (LiₓLa_{y}TiO₃, 0<x<2, 0<y<3), lithium germanium thiophosphate (LiₓGe_{y}P_{z}Sw, 0<x<4. 0<y<1, 0<z<1, 0<w<5), SiS₂ type glass (LiₓSi_{y}S_{z}, 0<x<3, 0<v<2, 0<z<4) and P₂S₅ type glass (LiₓP_{y}S_{z}, 0<x<3, 0<y<3, 0<z<7), wherein the inorganic particle is present in an amount of 0.01-10 part by weight per 100 parts by weight of the electrode active material capable of lithium intercalation/ deintercalation.

2. An electrochemical device comprising a cathode, anode, separator interposed between both electrodes and an electrolyte, wherein either or both of the cathode and anode are the electrodes as defined in claim 1.

3. The electrochemical device according to claim 2, which is a lithium secondary battery.

## Patentansprüche

1. Elektrode, umfassend:
(a) aktives Elektrodenmaterial, geeignet zur Lithium-Interkalation / Deinterkalation; und
(b) mindestens ein anorganisches Teilchen, ausgewählt aus der Gruppe bestehend aus:
Lithium-Titanphosphat (LiₓTi_{y}(PO₄)₃, 0 <x<2, 0<y<3), Lithium-Aluminium-Titanphosphat (LiₓAl_{y}Ti_{z}(PO₄)₃, 0<x<2, 0<y<1, 0<z<3), (LiAlTiP)ₓO_{y} Glastyp (0<x<4, 0<y<13), Lithium-Lanthan-Titanat (LiₓLa_{y}TiO₃, 0<x<2, 0<y<3), Lithium-Germanium-Thiophosphat (LiₓGe_{y}P_{z}S_{w}, 0<x<4, 0<y<1, 0<z<1, 0<w<5), SiS₂ Glastyp (LiₓSiyS_{z}, 0<x<3, 0<y<2, 0<z<4) und P₂S₅ Glastyp (LiₓP_{y}S_{z}, 0<x<3, 0<y<3, 0<z<7), wobei der anorganische Partikel in einem Anteil von 0,01-10 Gewichtsteilen pro 100 Gewichtsteilen des aktiven, zur Lithium-Interkalation / Deinterkalation geeigneten Elektrodenmaterials vorhanden ist.

2. Elektrochemische Vorrichtung, umfassend Kathode, Anode, Trennschicht, die zwischen beiden Elektroden und Elektrolyt gesetzt ist, wobei eine oder beide der Kathode und Anode die Elektroden sind, wie nach Anspruch 1 definiert.

3. Elektrochemische Vorrichtung nach Anspruch 2, welche ein Lithium-Akkumulator ist.

## Revendications

1. Electrode comprenant :
(a) un matériau actif d'électrode capable d'intercaler/désintercaler le lithium ; et
(b) au moins une particule inorganique choisie dans le groupe constitué : d'un phosphate de titane et de lithium (LiₓTi_{y}(PO₄)₃, 0 < x < 2, 0 < y < 3), d'un phosphate de titane et d'aluminium et de lithium (LiₓAl_{y}Ti_{z}(PO₄)₃, 0<x<2, 0<y<1, 0 < z < 3), d'un verre de type (LiAlTiP)ₓO_{y} (0 < x < 4, 0 < y < 13), d'un titanate de lanthane et de lithium (LiₓLa_{y}TiO₃, 0 < x < 2, 0 < y < 3), d'un thiophosphate de germanium et de lithium (LiₓGe_{y}P_{z}S_{w}, 0<x<4, 0<y<1, 0<z<1, 0<w<5), d'un verre de type SiS₂ (LiₓSi_{y}S_{z}, 0<x<3, 0<y<2, 0<z<4) et d'un verre de type P₂S₅ (LiₓP_{y}S_{z}, 0<x<3, 0<y<3, 0<z<7), dans laquelle la particule inorganique est présente en une quantité de 0,01 à 10 parties en poids pour 100 parties en poids du matériau actif d'électrode capable d'intercaler/désintercaler le lithium.

2. Dispositif électrochimique, comprenant une cathode, une anode, un séparateur intercalé entre les deux électrodes et un électrolyte, dans lequel la cathode et/ou l'anode sont les électrodes telles que définies dans la revendication 1.

3. Dispositif électrochimique selon la revendication 2, qui est batterie secondaire au lithium.
